# EUROPÄISCHE PATENTSCHRIFT

(11) **EP 2 423 076 B1**
(45) Veröffentlichungstag und Bekanntmachung des Hinweises auf die Patenterteilung: **27.03.2013**
(21) Anmeldenummer: 11006874.9
(22) Anmeldetag: 23.08.2011
(51) Int. Cl.: B62D 12/00

(54) **Vorrichtung zur gelenkigen Verbindung von zwei Fahrzeugrahmen einer Baumaschine**
Device for making an articulated connection between two vehicle frames of a construction machine
Dispositif de raccordement articulé de deux châssis de véhicules d'un engin

(30) Priorität: 23.08.2010 DE 102010035131
(43) Veröffentlichungstag der Anmeldung: 29.02.2012
(73) Patentinhaber: BOMAG GmbH, 56154 Boppard (DE)
(72) Erfinder: Wagner, Jens, 56154 Boppard (DE)
(74) Vertreter: Lang, Friedrich

(56) Entgegenhaltungen:
- WO-A1-2010/091517
- DE-A1- 3 136 158
- DE-U1- 8 209 885
- FR-A1- 2 520 776
- US-A- 4 471 850
- US-B1- 6 345 932

## Beschreibung

Die Erfindung betrifft eine Vorrichtung zur gelenkigen Verbindung von zwei Fahrzeugrahmen, einem Vorder- und einem Hinterrahmen, einer Baumaschine, insbesondere einer Vibrationswalze.

Bei Vibrationswalzen zur Bodenverdichtung kommen im Wesentlichen zwei Lenkungsarten zum Einsatz, nämlich die Knicklenkung und die Drehschemellenkung. Dank des einfachen Aufbaus, der hohen Robustheit und der relativ geringen Herstellungskosten findet die Knicklenkung nicht nur bei kleinen und großen Tandemwalzen für Straßen- und Asphaltbau, sondern auch bei anderen Typen von Vibrationswalzen, beispielsweise bei Kombiwalzen und Walzenzügen Anwendung. Beim Betrieb von Vibrationswalzen gibt es Situationen, bei denen ein seitlicher Versatz der vorderen Bandage gegenüber der hinteren Bandage, ein so genannter Hundegang, erforderlich ist. Dies ist der Fall, wenn die hintere Bandage nicht in der Spur der vorderen Bandage geführt werden soll, um beispielsweise Risse am Spurrand zu vermeiden oder um eng bis an den Kurvenrand verdichten zu können oder um einfach die Arbeitsbreite der Vibrationswalze zu erhöhen. Im Unterschied zu drehschemelgelenkten Vibrationswalzen, bei denen dank der voneinander unabhängigen Verstellmöglichkeit der beiden Drehschemel bzw. Bandagen in einfacher Weise ein Hundegang von über einem Meter nach rechts oder nach links möglich ist, musste bisher bei knickgelenkten Vibrationswalzen ein hoher konstruktiver Aufwand zur Ermöglichung des Hundegangs betrieben werden.

Eine Vorrichtung zur Kopplung von zwei Rahmen einer knickgelenkten Vibrationswalze, bei der ein Hundegang eingestellt werden kann, ist beispielsweise aus DE 8209885 U1 bekannt. Um den Vorderrahmen mit der darin gelagerten Vorderbandage gegenüber dem Hinterrahmen mit der darin gelagerten Hinterbandage seitlich versetzen zu können, wird das Knickgelenk selbst zusammen mit dem Kupplungsstück und dem Lenkantrieb in Führungsschienen gegenüber den Fahrzeugrahmen verschiebbar gelagert. Nachteilig hierbei ist der hohe Platzbedarf der Verbindungsvorrichtung sowohl in Längs- als auch in Querrichtung der Vibrationswalze. Aufgrund des komplizierten Aufbaus und der Vielzahl von Bauteilen ist die Verbindungsvorrichtung gemäß DE 8209885 U1 zudem auch sehr kostenaufwendig.

US 6 345 932 offenbart eine Vorrichtung gemäß dem Oberbegriff des Anspruchs 1.

Daher liegt der Erfindung die Aufgabe zugrunde, eine Vorrichtung zur gelenkigen Verbindung von zwei Fahrzeugrahmen anzugeben, welche die Nachteile der im Stand der Technik bekannten Vorrichtungen überwindet.

Die Aufgabe wird gelöst durch eine Vorrichtung gemäß Anspruch 1. Abhängige Ansprüche sind auf vorteilhafte Ausführungsformen der Erfindung gerichtet.

Die erfindungsgemäße Vorrichtung zur gelenkigen Verbindung von zwei Fahrzeugrahmen, einem Vorder- und einem Hinterrahmen, einer Baumaschine, insbesondere einer Vibrationswalze, umfasst ein Knickgelenk mit einer vertikalen Knickachse sowie ein Hundeganggelenk mit einer vertikalen Drehachse. Sie umfasst ferner einen Verbindungsträger, welcher das Knickgelenk und das Hundeganggelenk miteinander verbindet und einen Verbindungsstab, welcher einerseits an einem der Fahrzeugrahmen und andererseits am Verbindungsträger angelenkt ist. Des weiteren umfasst sie einen Lenkantrieb zur relativen Verschwenkung des Vorder- und Hinterrahmens um die Knickachse, wobei der Lenkantrieb einerseits an einem der Fahrzeugrahmen und andererseits am Verbindungsträger angelenkt ist, und einen Hundegangantrieb zur Einstellung eines seitlichen Versatzes zwischen dem Vorder- und dem Hinterrahmen, wobei der Hundegangantrieb einerseits an einem der Fahrzeugrahmen und andererseits am Verbindungsträger angelenkt ist.

Der Erfindung liegt die Erkenntnis zugrunde, dass durch die erfindungsgemäße Anordnung von Knickgelenk, Hundeganggelenk, Verbindungsträger, Verbindungsstab sowie der Antriebe für die Lenkung und den Hundegang eine höchst kompakte Vorrichtung zur gelenkigen Verbindung von zwei Fahrzeugrahmen geschaffen wird. Die erfindungsgemäße Vorrichtung nimmt nur einen geringen Bauraum in sowohl Längs- als auch Querrichtung der Baumaschine ein, so dass die Gesamtlänge der Baumaschine nicht unnötig erhöht wird. Dank der Kompaktheit wird mehr Platz für die Anordnung anderer Bauteile zur Verfügung gestellt. Trotz des geringen Platzbedarfs ermöglicht die erfindungsgemäße Verbindungsvorrichtung einen großen Hundegang. Der Verbindungsstab dient als starrer Fessel zur Einschränkung der Freiheitsgrade der Verbindungsvorrichtung.

In einer vorteilhaften Ausführungsform der Erfindung sind das Knickgelenk hinterrahmenseitig und das Hundeganggelenk vorderrahmenseitig angeordnet, wobei der Verbindungsstab und der Hundegangantrieb am Hinterrahmen und der Lenkantrieb am Vorderrahmen angelenkt sind.

Als Vorderrahmen wird derjenige Fahrzeugrahmen definiert, welcher in der bevorzugten bzw. überwiegenden Fahrtrichtung der Baumaschine vorn angeordnet ist. Dementsprechend ist der Hinterrahmen in der beschriebenen Fahrtrichtung betrachtet hinten angeordnet. Es ist bekannt, dass viele Baumaschinen, vor allem Vibrationswalzen, im Betrieb reversieren, d. h. die Fahrtrichtung ändern. Die Bezeichnungen, "Vorderrahmen" und "Hinterrahmen", sind nicht an die momentane Fahrtrichtung gekoppelt, so dass beim Reversieren, d. h. dem Wechsel von der bevorzugten bzw. überwiegenden Fahrtrichtung in die Gegenrichtung, der Hinterrahmen in Fahrtrichtung betrachtet vor dem Vorderrahmen liegt. Die erfindungsgemäße Vorrichtung ist im Wesentlichen im Bereich zwischen dem Vorder- und dem Hinterrahmen angeordnet. Unter den Begriffen "vorderrahmen-" oder "hinterrahmenseitig" soll verstanden werden, dass das Knick- oder Hundeganggelenk in Längs- bzw. Fahrtrichtung der Baumaschine betrachtet näher zum Vorder- oder Hinterrahmen bzw. näher zur Vorder- oder Hinterbandage angeordnet ist. Die erfindungsgemäße Anordnung des Knick- und Hundeganggelenks erhöht die Kompaktheit weiter, indem ein Teil der Verbindungsvorrichtung innerhalb der Fahrzeugrahmen verlaufend angeordnet ist bzw. von Teilen überdeckt wird, die fest mit dem Rahmen verbunden sind.

Die Gesamtlänge der Baumaschine weist in einer Normalstellung, bei der die Längsmittelachsen der Fahrzeugrahmen parallel zueinander ausgerichtet sind, durch Betätigung des Hundegangantriebs einen um eine Längenzunahme größeren Wert auf als in einer Normalstellung bei Nichtbetätigung des Hundegangantriebs.

Ein wesentlicher Vorteil der erfindungsgemäßen Vorrichtung besteht darin, dass sich die Gesamtlänge der Baumaschine infolge der Betätigung des Hundegangantriebs um eine Längenzunahme verlängert. Dank der erfindungsgemäßen Anordnung der Gelenke, des Verbindungsträgers und des Verbindungsstabes verlängert sich die Verbindungsvorrichtung beim Betätigen des Hundegangs in Längsrichtung, so dass sich der Abstand zwischen Vorder- und dem Hinterrahmen vergrößert. Bei herkömmlichen Verbindungsvorrichtungen bleibt beim Betätigen des Hundegangs der Abstand zwischen dem Vorder- und dem Hinterrahmen gleich, wie beispielsweise aus DE 8209885 U1 bekannt. Bei anderen knickgelenkten Baumaschinen, bei denen der Verbindungsträger direkt an den beiden Fahrzeugrahmen angelenkt ist, wird der Abstand zwischen dem Vorder- und Hinterrahmen sogar verringert, wenn der Hundegang eingestellt wird. Dies führt dazu, dass zur Vermeidung einer Kollision der Rahmenkanten bei einer Knickbewegung nur ein geringer Lenkwinkel realisiert wird. Infolgedessen sinkt die Manövrierfähigkeit bei eingestelltem Hundegang. Erfindungsgemäß dagegen wird der Abstand zwischen Vorder- und Hinterrahmen und somit die Gesamtlänge der Baumaschine bei Betätigung des Hundegangantriebs erhöht. Dies führt dazu, dass bei maximalem Hundegang ein größerer Lenkwinkel eingestellt werden kann und dass mehr Bauraum zur Verfügung steht.

Gemäß einer bevorzugten Ausführungsform der Erfindung ist die maximal erzielbare Längenzunahme gleich der Länge des Verbindungsträgers. Als die "Länge des Verbindungsträgers" wird in diesem Zusammenhang der Abstand zwischen dem Knick- und dem Hundeganggelenk, insbesondere der Abstand zwischen der Knickachse und der vertikalen Drehachse des Hundeganggelenks verstanden. Durch die teilweise Entkopplung der Gelenke wird erreicht, dass bei Betätigung des Hundegangantriebs eine Rotation des Verbindungsträgers um die vertikale Drehachse des Hundeganggelenks stattfinden kann. Der starre Verbindungsstab sorgt für eine definierte Bewegung des Hinterrahmens zum Vorderrahmen und insgesamt wird eine Längenzunahme erzielt, deren Grenzwert gleich der Länge des Verbindungsträgers ist. Entsprechend ist auch der maximal einstellbare Versatz des Vorderrahmens zum Hinterrahmen gleich der Länge des Verbindungsträgers.

Vorzugsweise ist der Hundegangantrieb bei Nichtbetätigung starr ausgebildet, wobei dessen Längsachse in der Normalstellung senkrecht zur Längsachse des Verbindungsstabs ist. Damit bilden bei Nichtbetätigung des Hundegangantriebs der Hundegangantrieb selbst und der Verbindungsstab zwei starre Fessel, die senkrecht zueinander angeordnet sind. Sowohl der Hundegangantrieb als auch der Verbindungsstab sind jeweils mit dem einem Ende am Verbindungsträger, insbesondere an einem entsprechenden Aufnahmeteil angelenkt und mit dem anderen Ende am Hinterrahmen angelenkt. Dies führt dazu, dass bei einer Betätigung des Lenkantriebs, welcher seinerseits mit dem einen Ende an einer Lenkantriebaufnahme am Verbindungsträger und mit dem anderen Ende am Vorderrahmen angelenkt ist, eine Rotation des Hinterrahmens um die Knickachse stattfinden kann.

In einer bevorzugten Ausführungsform der Erfindung umfasst der Verbindungsträger ein gemeinsames Aufnahmeelement für den Lenkantrieb, für den Hundegangantrieb und für den Verbindungsstab, wobei dieses drehbar auf einem die Knickachse bildenden Lenkbolzen angeordnet ist. Anstelle des Vorsehens separater Aufnahmeteile kann ein gemeinsames Aufnahmeelement vorgesehen werden, welcher auf einem vom Verbindungsträger getragenen, die Knickachse definierenden Bolzen angeordnet ist. Dies spart Herstellungskosten und reduziert weiter den Platzbedarf. Das Aufnahmeelement gibt in einfacher Weise die benötigten geometrischen und physikalischen Größen, beispielsweise Hebelarme, vor. Vorzugsweise ist die Längsachse des Verbindungsstabes im Wesentlichen parallel zur Längsachse des Verbindungsträgers ausgerichtet.

Vorzugsweise umfasst die erfindungsgemäße Vorrichtung zusätzlich ein Pendellager. In einfacher Weise kann am Bolzen des Verbindungsträgers ein Aufnahmeteil für ein Pendellager angeordnet werden. Das Pendellager lässt eine Pendelbewegung des Hinterrahmens gegenüber dem Vorderrahmen, d. h. eine rotatorische Bewegung um eine horizontale Achse, beispielsweise um eine der Längmittelachsen der Fahrzeugrahmen zu. Somit wird in kompakter Weise ein komplettes System zur Verfügung gestellt, mit welchem zwei Fahrzeugrahmen optimal für den Einsatz auf Baustellen miteinander verbunden werden können.

In einer weiteren vorteilhaften Ausführungsform der Erfindung ist das Knickgelenk in der Normalstellung in Richtung der Längsachse der Baumaschine mittig angeordnet. Anders ausgedrückt wird die Gesamtlänge der Baumaschine durch das Knickgelenk halbiert. Dies führt dazu, dass im Falle einer Tandemwalze, die Hinterbandage - auch bei Lenkbewegungen - genau der Spur der Vorderbandage folgt, sofern auch die Bandagen gleich weit vom Knickgelenk beanstandet sind. Dies ist vorteilhaft, da Reibungsverluste der Hinterbandage herabgesetzt werden können.

Die Erfindung betrifft auch eine knickgelenkte Vibrationswalze, insbesondere eine Tandemwalze, mit einer erfindungsgemäßen Vorrichtung zur gelenkigen Verbindung.

Nachfolgend wird die Erfindung anhand von Figuren näher erläutert. Es zeigen schematisch:
- Figur 1: eine perspektivische Ansicht auf eine Baumaschine mit einer Ausführungsform der er-findungsgemäßen Verbindungsvorrichtung in einer Normalstellung;
- Figur 2: eine Draufsicht auf die Baumaschine aus Fig. 1 beim Lenkvorgang;
- Figur 3: eine Draufsicht auf die Baumaschine aus Fig. 1 mit Hundegang;
- Figur 4: eine Draufsicht auf die Baumaschine aus Fig. 1 mit Hundegang beim Lenkvorgang;
- Figur 5: eine vergrößerte Draufsicht auf die Verbindungsvorrichtung aus Fig. 1;
- Figur 6: eine Seitenansicht auf die Verbindungsvorrichtung aus Fig. 5;
- Figur 7: eine Schnittansicht der Verbindungsvorrichtung aus Fig. 6;
- Figur 8: eine perspektivische Ansicht auf die Verbindungsvorrichtung aus Fig. 5, ohne obere Rahmenanbindung 20a;
- Figur 9a: eine Draufsicht auf die Verbindungsvorrichtung beim Lenkvorgang;
- Figur 9b: eine Draufsicht auf die Verbindungsvorrichtung mit Hundegang;
- Figur 10: eine Draufsicht auf zwei Baumaschinen mit und ohne Hundegang in Normalstellung.

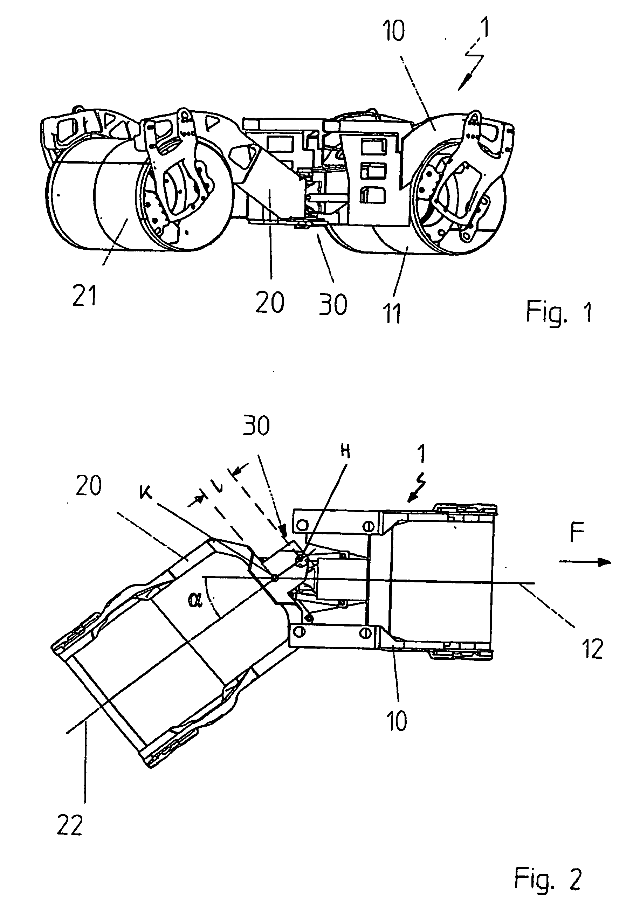

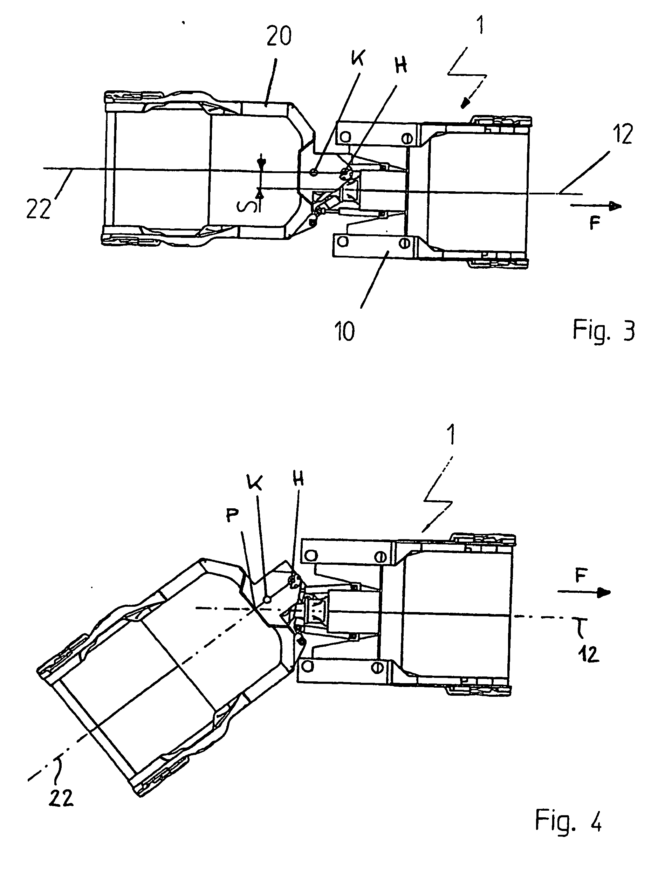

Die Figuren 1 bis 4 zeigen eine Baumaschine 1, nämlich eine Tandemwalze zur Bodenverdichtung. In den Figuren werden zur besseren Darstellung der erfindungsgemäßen Vorrichtung 30 zur gelenkigen Verbindung von zwei Fahrzeugrahmen 10, 20, einem Vorderrahmen 10 und einem Hinterrahmen 20, einige Teile nicht gezeigt. Im Vorderrahmen 10 ist eine Vorderbandage 11 und im Hinterrahmen 20 ist eine Hinterbandage 21 gelagert. Die Baumaschine 1 bewegt sich vorzugsweise bzw. überwiegend in die Fahrtrichtung F, allerdings ist ein Richtungswechsel in die Gegenrichtung problemlos möglich. Beim Lenken (Fig. 2) wird ein Lenkwinkel α zwischen der Längsmittelachse 12 des Vorderrahmens 10 und der Längsmittelachse 22 des Hinterrahmens 20 eingestellt. Beim Hundegang (Fig. 3) verlaufen die beiden Längsachsen 12, 22 parallel zueinander, und es wird ein seitlicher Versatz s zwischen der Längsmittelachse 12 des Vorderrahmens 10 und der Längsmittelachse 22 des Hinterrahmens 20 eingestellt. Wie in Fig. 4 gezeigt, ist eine Überlagerung des Lenkvorgangs mit dem Hundegang ohne weiteres möglich.

Eine vertikale Knickgelenkachse K und eine vertikale Drehachse H für den Hundegang liegen beabstandet voneinander auf der Längsmittelachse 22 des Hinterrahmens 20, wobei die rehachse H für den Hundegang näher am vorderen Fahrzeugrahmen 10 zu liegen kommt, als die Knickgelenkachse K. Der Abstand ist mit I bezeichnet.

Gemäß Fig. 2 schneiden sich die Längsmittelachsen 12 und 22 des vorderen bzw. hinteren Fahrzeugrahmens 10, 20 bei Kurvenfahrt in der Knickgelenkachse K, wenn kein Hundegang vorliegt. Wenn sich gemäß Fig. 4 ein Lenkvorgang und ein überlagern, liegt der Schnittpunkt P der beiden Längsmittelachsen 12, 22 neben der Knickgelenkachse K auf der Längsmittelachse 22 des Hinterrahmens 20, und zwar auf der bezüglich der Drehachse H gegenüberliegenden Seite der Knickgelenkachse K. Bei Geradausfahrt (nicht dargestellt) liegen die Knickgelenkachse K und die Drehachse H sowohl auf der Längsmittelachse 22 des Hinterrahmens 20, als auch auf der Längsmittelachse 12 des Vorderrahmens 10.

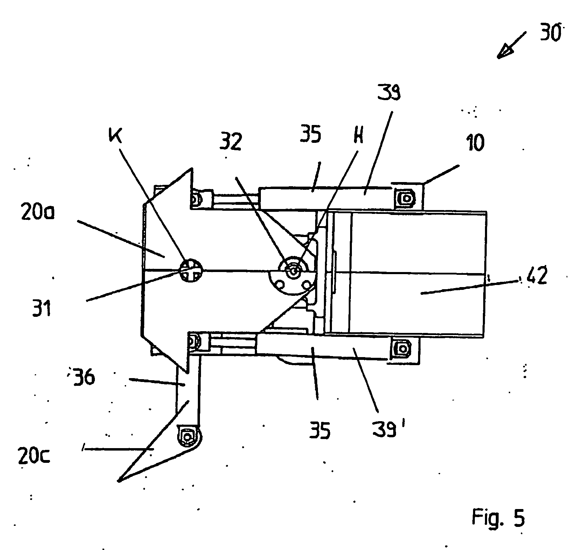

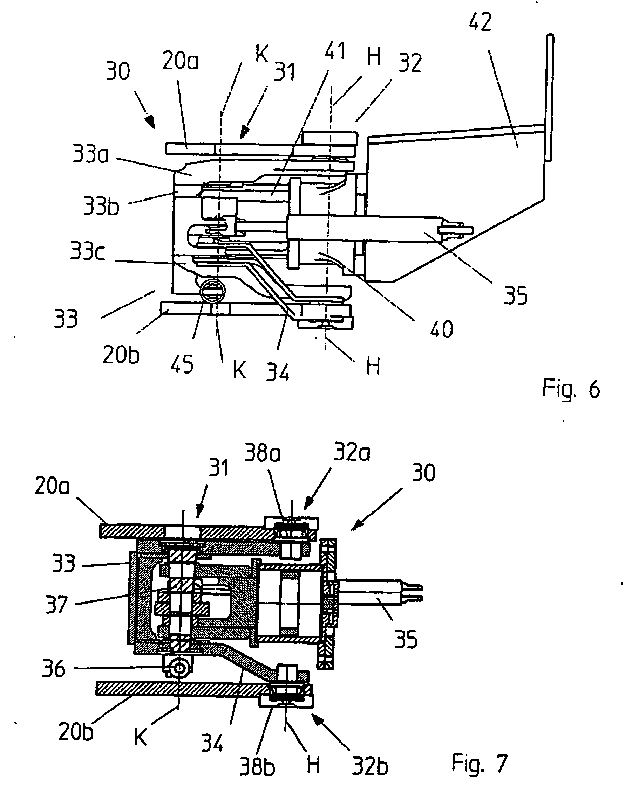

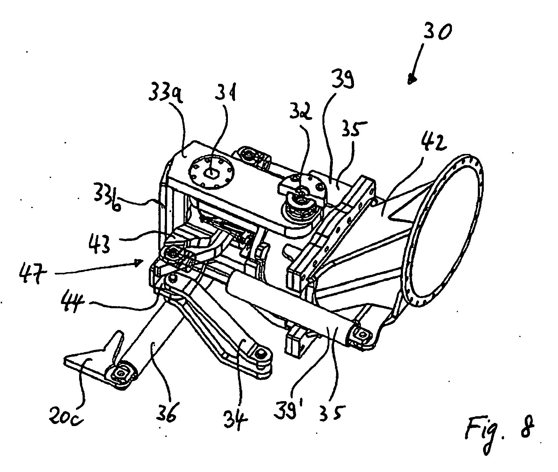

Figuren 5 bis 8 zeigen verschiedene Ansichten einer Ausführungsform der erfindungsgemäßen Vorrichtung 30 zur gelenkigen Verbindung der beiden Fahrzeugrahmen 10, 20. Auch hier sind Teile aus darstellungstechnischen Gründen entweder ganz oder teilweise nicht gezeigt. Die erfindungsgemäße Vorrichtung 30 umfasst demnach ein Knickgelenk 31 mit der Knickachse K und ein Hundeganggelenk 32 mit der vertikalen Drehachse H. Ein Verbindungsträger 33, welcher eine obere Trägerplatte 33a, eine seitliche Trägerplatte 33b und eine untere Trägerplatte 33c umfasst, verbindet das Knickgelenk 31 und das Hundeganggelenk 32 miteinander. Der Verbindungsträger 33 ist ein Teil des Hundeganggelenks 32 und als Schwenkarm einerseits am vorderen Fahrzeugrahmen 10 und andererseits am hinteren Fahrzeugrahmen 20 gelagert. Er trägt das Knickgelenk 31. Auf dem Lenkbolzen 37 sind verschiedene Aufnahmeteile 41, 43, 44, 45, nämlich die Aufnahme 43 für den Lenkantrieb 35, die Aufnahme 41 für das Pendellager 40, die Aufnahme 44 für den Verbindungsstab 34 und die Aufnahme 45 für den Hundegangantrieb 36, angeordnet. Die Aufnahmeelemente 43, 44 und 45 können als ein gemeinsames Aufnahmeelement 47 ausgeführt sein. Das Pendellager 40 gestattet einen Winkelversatz zwischen dem vorderen und dem hinteren Fahrzeugrahmen 10, 20 um eine horizontale Achse.

Sowohl der Lenkantrieb 35 als auch der Hundegangantrieb 36 sind im gezeigten Beispiel als hydraulische Betätigungszylinder 39, 39' ausgeführt. Der Lenkantrieb 35 ist kolben- bzw. gehäuseseitig am Vorderrahmen 10 und kolbenstangenseitig an der Aufnahme 43 angelenkt. Die Aufnahme 43 bildet einen zweischenkeligen Hebelarm für die Knickbewegung um die Knickachse K, wobei an jeweils einem der Schenkel einer der Betätigungszylinder 39 bzw. 39' angreift. Für eine Lenkbewegung werden die beiden Betätigungszylinder 39, 39', die bezüglich der Knickachse K gegenüberliegend angeordnet sind" gegensinnig angesteuert. An der Aufnahme 44 ist der Verbindungsstab 34 angelenkt, welcher mit dem anderen Ende an einer Rahmenplatte 20c angelenkt ist, wobei die Rahmenplatte 20c fest mit dem Hinterrahmen 20 verbunden ist. Der Verbindungsstab 34 gewährleistet die Parallelführung der Aufnahme 43 des Lenkantriebs 35 bezüglich des Hinterrahmens 20.

Die Aufnahme 45 definiert einen Hebelarm für den Hundegangantrieb 36 bezüglich der Drehachse H. Im dargestellten Beispiel entspricht die Länge dieses Hebelarms dem Abstand I von Knickgelenk K und Drehachse H, da der Hundegangantrieb 36 im Bereich des Knickgelenks 31 am Verbindungsträger 33 angreift. Der Hebelarm wird von der oberen Trägerplatte 33a gebildet.

Das Hundeganggelenk 32 ist zweiteilig ausgeführt und umfasst ein oberes und ein unteres Hundeganggelenkteil 32a, 32b. Das obere Gelenkteil 32a wird gebildet aus der oberen Rahmenanbindung 20a, dem oberen Bolzen 38a und der oberen Trägerplatte 33a. Das untere Gelenkteil 32b wird gebildet aus der unteren Rahmenanbindung 20b, dem unteren Bolzen 38b und der unteren Trägerplatte 33b. Das Pendellager 40 ist über den Adapter 42 mit dem Vorderrahmen 10 verbunden.

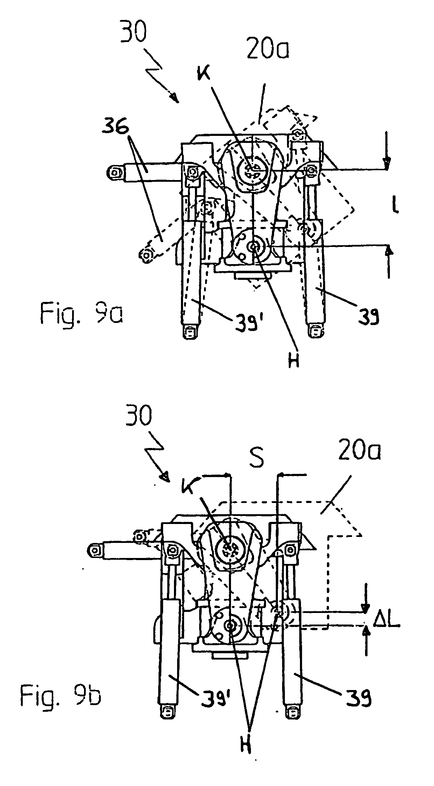

Figur 9a zeigt eine Draufsicht auf die erfindungsgemäße Vorrichtung 30 beim Lenkvorgang. Durchgezogene Linien zeigen den Zustand vor der Einleitung des Lenkvorgangs und die gestrichelten Linien zeigen den Zustand während des Lenkvorgangs. Durch Betätigen des Lenkantriebs 35 findet eine Rotation des Hinterrahmens 20 um die Knickachse K statt. Der Hundegangantrieb 36 ist bei einer reinen Lenkbewegung als eine starre Verbindung zwischen dem Hinterrahmen 20 und dem Verbindungsträger 33 bzw. der Aufnahme 45 des Hundegangantriebs 36 zu betrachten.

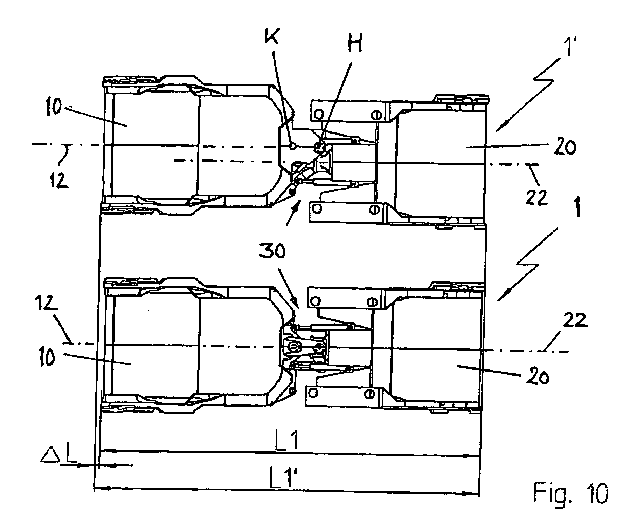

Figur 9b zeigt eine Draufsicht auf die erfindungsgemäße Vorrichtung 30 beim Hundegang. Durchgezogene Linien zeigen den Zustand vor der Einleitung des Hundegangs und die gestrichelten Linien zeigen den Zustand mit dem seitlichen Versatz s. Durch das Betätigen des Hundegangantriebs 36 wird ein seitlicher Versatz s und zugleich auch eine Längenzunahme ΔL erzielt. Bei entsprechender Auslegung ist ein maximaler Versatz s in Höhe der Länge I und eine maximale Längenzunahme ΔL ebenfalls in Höhe der Länge I des Verbindungsträgers 33 möglich. Als die Länge I des Verbindungsträgers 33 wird in diesem Fall der Abstand der Knickachse K zur Drehachse H des Hundeganggelenks 32 verstanden. In Figur 10 ist die Längenzunahme ΔL = L1' - L1 der Baumaschine 1 in einer Gesamtansicht dargestellt. Ein weiterer Vorteil der Erfindung besteht darin, dass der Lenkantrieb 35, wie in Fig. 9b gezeigt, von der Hundegangbewegung des Hinterrahmens 20 gegenüber dem Vorderrahmen 10 entkoppelt ist, d. h. die Bewegung nicht mitzumachen braucht. Dadurch werden die Betätigungszylinder des Lenkantriebs 35 verschont.

## Patentansprüche

1. Vorrichtung (30) zur gelenkigen Verbindung von zwei Fahrzeugrahmen (10, 20), einem Vorder- und einem Hinterrahmen, einer Baumaschine (1), insbesondere einer Vibrationswalze, umfassend:
ein Knickgelenk (31) mit einer vertikalen Knickachse (K) an einem der beiden Fahrzeugrahmen (10);
ein vom Knickgelenk (31) beabstandetes Hundeganggelenk (32) mit einer vertikalen Drehachse (H) am anderen der beiden Rahmen (20);
einen Verbindungsträger (33), welcher das Knickgelenk (31) und das Hundeganggelenk (32) miteinander verbindet;
einen Lenkantrieb (35) zur relativen Verschwenkung der beiden Fahrzeugrahmen (10, 20) um die Knickachse (K), wobei der Lenkantrieb (35) einerseits an dem mit dem Knickgelenk (31) verbundenen Fahrzeugrahmen (10) und andererseits am Verbindungsträger (33) angelenkt ist;
einen Hundegangantrieb (36) zur Einstellung eines seitlichen Versatzes (s) zwischen dem Vorder- (10) und dem Hinterrahmen (20), wobei der Hundegangantrieb (36) einerseits an dem mit dem Hundeganggelenk (32) verbundenen Fahrzeugrahmen (20) und andererseits am Verbindungsträger (33) angelenkt ist,
**dadurch gekennzeichnet,**
**dass** die Drehachse (H) des Hundeganggelenks (32) in der Weise näher an dem mit dem Knickgelenk (31) verbundenen Fahrzeugrahmen (10) zu liegen kommt, als die Knickgelenkachse (K), dass sich der Abstand zwischen den beiden Fahrzeugrahmen (10, 20) bei Betätigung des Hundegangs vergrößert.

2. Vorrichtung (30) nach Anspruch 1,
**dadurch gekennzeichnet,**
**dass** das Knickgelenk (31) hinterrahmenseitig und das Hundeganggelenk (32) vorderrahmenseitig angeordnet sind, wobei der Verbindungsstab (34) und der Hundegangantrieb (36) am Hinterrahmen (20) und der Lenkantrieb (35) am Vorderrahmen (10) angelenkt sind.

3. Vorrichtung (30) nach einem der vorhergehenden Ansprüche,
**dadurch gekennzeichnet,**
**dass** die maximal erzielbare Längenzunahme (ΔL) gleich der Länge (I) des Verbindungsträgers (33) ist.

4. Vorrichtung (30) nach einem der vorhergehenden Ansprüche,
**dadurch gekennzeichnet,**
**dass** der Hundegangantrieb (36) bei Nichtbetätigung starr ausgebildet ist, wobei dessen Längsachse in der Normalstellung senkrecht zur Längsachse des Verbindungsstabs (34) ist.

5. Vorrichtung (30) nach einem der vorhergehenden Ansprüche,
**dadurch gekennzeichnet,**
**dass** der Verbindungsträger (33) ein gemeinsames Aufnahmeelement (47) für den Lenkantrieb (35), für den Hundegangantrieb (36) und für den Verbindungsstab (34) umfasst, wobei dieses (47) drehbar auf einem die Knickachse (K) bildenden Lenkbolzen (37) angeordnet ist.

6. Vorrichtung (30) nach einem der vorhergehenden Ansprüche,
**dadurch gekennzeichnet,**
**dass** sie (30) zusätzlich ein Pendellager (40) umfasst.

7. Vorrichtung (30) nach einem der vorhergehenden Ansprüche,
**dadurch gekennzeichnet,**
**dass** das Knickgelenk (31) in der Normalstellung in Richtung der Längsachse der Baumaschine (1) mittig angeordnet ist.

8. Knickgelenkte Vibrationswalze, insbesondere eine Tandemwalze, mit einer Vorrichtung (30) zur gelenkigen Verbindung nach einem der vorhergehenden Ansprüche.

## Claims

1. An apparatus (30) for the articulated connection of two vehicle frames (10, 20), a front frame and a rear frame, of a construction machine (1), especially a vibration roller, comprising:
a pivot joint (31) with a vertical pivot axis (K) on one of both vehicle frames (10);
a crab-steering joint (32) being located at a distance from the pivot joint (31) and being provided with a vertical rotational axis (H) on the other of two frames (20);
a connection support (33) which connects the pivot joint (31) and the crab-steering joint (32) with one another;
a steering drive (35) for relative pivoting of both vehicle frames (10, 20) about the pivot axis (K) with the steering drive (35) being linked on one side to the vehicle frame (10) which is connected to the pivot joint (31) and on the other to the connection support (33);
a crab-steering drive (36) for setting a lateral offset (s) between the front frame (10) and the rear frame (20), the crab-steering drive (36) being linked on one side to the vehicle frame (20) which is connected to the crab-steering joint (32) and on the other to the connection support (33;)
**characterized in that**
the rotational axis (H) of the crab-steering joint (32) is connected more closely to the vehicle frame (10), which is linked to the pivot joint (31), than to the pivot axis (K) such that the distance between both vehicle frames (10, 20) increases when the crab-steering drive is actuated.

2. An apparatus (30) according to claim 1,
**characterized in that**
the pivot joint (31) is arranged on the side of the rear frame and the crab steering joint (32) is arranged on the side of the front frame, wherein the connecting rod (34) and the crab-steering drive (36) are linked to the rear frame (20) and the steering drive (35) is linked to the front frame (10).

3. An apparatus (30) according to any one of the preceding claims,
**characterized in that**
the maximum increase in length (ΔL) achievable is equal to the length (I) of the connection support (33).

4. An apparatus (30) according to any one of the preceding claims,
**characterized in that**
the crab-steering drive (36) is rigidly arranged upon non-actuation, wherein its longitudinal axis is perpendicular to the longitudinal axis of the connecting rod (34) in the normal position.

5. An apparatus (30) according to any one of the preceding claims,
**characterized in that**
the connection support (33) comprises a common receiving element (47) for the steering drive (35), the crab-steering drive (36) and the connecting rod (34), wherein the receiving element (47) is rotatably arranged on a steering pin (37) forming the pivot axis (K).

6. An apparatus (30) according to any one of the preceding claims,
**characterized in that**
the apparatus (30) additionally comprises a pendulum bearing (40).

7. An apparatus (30) according to any one of the preceding claims,
**characterized in that**,
in the normal position, the pivot joint (31) is arranged centrally in the direction of the longitudinal axis of the construction machine (1).

8. A pivot-steered vibration roller, especially a tandem roller, comprising an apparatus (30) for an articulated connection according to one of the preceding claims.

## Revendications

1. Dispositif (30) pour la liaison articulée de deux châssis de véhicule (10, 20), un châssis avant et un châssis arrière, d'un engin de chantier (1), en particulier d'un rouleau vibrant, comprenant :
une articulation pivotante (31) avec un axe de pivotement (K) vertical sur l'un des deux châssis de véhicule (10) ;
une articulation pour marche en crabe (32) avec un axe de rotation (H) vertical, distante de l'articulation pivotante (31), sur l'autre des deux châssis (20) ;
un support de liaison (33) qui relie entre elles l'articulation pivotante (31) et l'articulation pour marche en crabe (32) ;
un entraînement de direction (35) pour le pivotement relatif des deux châssis (10, 20) autour de l'axe de pivotement (K), l'entraînement de direction (35) étant articulé d'une part sur le châssis de véhicule (10) relié à l'articulation pivotante (31) et d'autre part sur le support de liaison (33) ;
un entraînement de marche en crabe (36) pour créer un décalage latéral (s) entre le châssis avant (10) et le châssis arrière (20), l'entraînement de marche en crabe (36) étant articulé d'une part sur le châssis de véhicule (20) relié à l'articulation pour marche en crabe (32) et d'autre part sur le support de liaison (33) ;
**caractérisé en ce que** l'axe de rotation (H) de l'articulation pour marche en crabe (32) vient se placer plus près du châssis de véhicule (10) relié à l'articulation pivotante (31) que l'axe de pivotement (K) de l'articulation pivotante, de sorte que la distance entre les deux châssis de véhicule (10, 20) augmente pour réaliser la marche en crabe.

2. Dispositif (30) selon la revendication 1, **caractérisé en ce que** l'articulation pivotante (31) est disposée du côté du châssis arrière et l'articulation pour marche en crabe (32) du côté du châssis avant, la barre de liaison (34) et l'entraînement de marche en crabe (36) étant articulés sur le châssis arrière (20) et l'entraînement de direction (35) sur le châssis avant (10).

3. Dispositif (30) selon l'une des revendications précédentes, **caractérisé en ce que** l'augmentation de longueur maximale possible (ΔL) est égale à la longueur (I) du support de liaison (33).

4. Dispositif (30) selon l'une des revendications précédentes, **caractérisé en ce que** l'entraînement de marche en crabe (36) est conçu pour être rigide lorsqu'il n'est pas actionné, son axe longitudinal étant perpendiculaire à l'axe longitudinal de la barre de liaison (34) dans la position normale.

5. Dispositif (30) selon l'une des revendications précédentes, **caractérisé en ce que** le support de liaison (33) comprend un élément de logement commun (47) pour l'entraînement de direction (35), pour l'entraînement de marche en crabe (36) et pour la barre de liaison (34), celui-ci (47) étant disposé avec possibilité de rotation sur un boulon de guidage (37) formant l'axe de pivotement (K).

6. Dispositif (30) selon l'une des revendications précédentes, **caractérisé en ce que** ce dispositif (30) comprend en outre un palier pendulaire (40).

7. Dispositif (30) selon l'une des revendications précédentes, **caractérisé en ce que** l'articulation pivotante (31), dans la position normale, est disposée au milieu dans la direction de l'axe longitudinal de l'engin de chantier (1).

8. Rouleau vibrant à articulation pivotante, en particulier rouleau tandem, avec un dispositif (30) de liaison articulée selon l'une des revendications précédentes.
